Europäisches Patentamt

European Patent Office

Office européen des brevets

(11) Publication number: **0 439 254 A2**

# EUROPEAN PATENT APPLICATION

(21) Application number: **91300101.2**

(22) Date of filing: **07.01.91**

(51) Int. Cl.5: **C08F 220/18, C10M 149/06**

(30) Priority: **23.01.90 US 468518**

(43) Date of publication of application:
**31.07.91 Bulletin 91/31**

(84) Designated Contracting States:
**AT BE CH DE DK ES FR GB GR IT LI LU NL SE**

(71) Applicant: **ROHM AND HAAS COMPANY**
**Independence Mall West**
**Philadelphia Pennsylvania 19105(US)**

(72) Inventor: **Gore, Robert Howard**
**1388 Cushmore Road**
**Southampton, Pennsylvania 18966(US)**
Inventor: **Kinker, Bernard George**
**Durham & Buck Roads, RD 2, Box 47**
**Kintnersville, Pennsylvania 18930(US)**

(74) Representative: **Tanner, James Percival et al**
**ROHM AND HAAS (UK) LTD. European**
**Operations Patent Department Lennig House**
**2 Mason's Avenue**
**Croydon, Surrey, CR9 3NB(GB)**

(54) Dispersant polymethacrylate viscosity index improvers.

(57) It has been found that by polymerizing several alkyl methacrylates and N,N-dialkylaminoalkyl methacrylamide monomers and controlling the component weight ratio, a novel polymer with surprising properties, when used as an additive for hydrocarbon lubricating oils, can be produced. The polymer of this invention demonstrates superior properties as a viscosity index improver and a detergent dispersant and, in some instances, eliminates the need for a pour point depressant.

EP 0 439 254 A2

## DISPERSANT POLYMETHACRYLATE VISCOSITY INDEX IMPROVERS

This invention is concerned with novel polymers derived from alkyl methacrylates and N,N-dialkylaminoalkyl methacrylamide monomers. These polymers are useful as additives to hydrocarbon lubricating oils for the purpose of improving the viscosity index and the detergent dispersancy and, in some instances, eliminating the need for pour point depressants. The polymers are normally dissolved or dispersed in refined mineral lubricating oil for eventual incorporation in a lubricating oil base stock. Lubricating oils, particularly automatic transmission fluids, containing these polymers, exhibit improved properties over lubricating oils containing currently available additives.

Lubricating oils derived from natural petroleum crude or by synthetic means have several properties detrimental to their desired performance. One such property is the dependence of oil viscosity on temperature. As the temperature of a lubricating oil increases, the viscosity decreases and, depending on the type of oil, it may decrease to a level where adequate performance is no longer possible. Alternatively, as the temperature of the lubricating oil decreases, the viscosity increases and eventually reaches a point where the oil will no longer flow. During normal operation, lubricating oils such as engine oils and/or transmission fluids, are used over a wide range of temperatures and, therefore, the viscosity must be maintained at a proper level throughout the operable engine temperature range to assure adequate lubrication.

The most desirable lubricating oil for internal combustion engines and automatic transmission fluids is one with a low pour point and a low rate of change of viscosity over a wide range of temperatures. These characteristics would allow the oil to flow at the lowest possible temperature of operation, usually at engine start-up, and, as the temperature increases into the operating range, the viscosity would remain at a level suitable for performance. To achieve these desired properties, along with several others, modification of the lubricating oil is necessary through the incorporation of several additives. The types of additives used include viscosity index improvers, pour point depressants, detergent dispersants, oxidation inhibitors, etc.

Polymeric additives have been used to enhance the performance of engine lubricating oils in regard to several of these undesirable properties. However, many of these polymeric additives also have an undesirable thickening effect on the oil. Polymers of alkyl acrylates and copolymers of methacrylates and dialkylaminoalkyl methacrylates have been used successfully as viscosity index improvers, pour point depressants and detergent dispersants. These polymers improve the desired properties of the lubricating oil with only minimal adverse effects on the viscosity of the oil.

A typical lubricating oil additive is described in US-A-4,021,357. The additive described is a polymer composed of the polymerized monomers of, (a) an alkyl methacrylate wherein the alkyl group contains from 1 to 5 carbon atoms, (b) an alkyl methacrylate wherein the alkyl group contains from 10 to 15 carbon atoms, (c) an alkyl methacrylate wherein the alkyl group contains from 16 to 20 carbon atoms and (d) an N,N-dialkylaminoalkyl methacrylamide. Said monomers (a),(b),(c) and (d) are polymerized in a weight ratio of from 15:62:20:3 to 25:40:25:10. The preferred monomers used to synthesize the tetrapolymer of US-A-4,021,357 are (a) butyl methacrylate, (b) dodecyl methacrylate, (c) octadecyl methacrylate and (d) N,N-dimethylaminopropyl methacrylamide.

US-A-4,021,357 addresses the problem of increasing viscosity or even gelling in heavy-duty motor oils which contain amino polymethacrylates. This problem occurs when engines are run at high temperatures for several thousand miles and is believed to be caused by engine "blow-by". Engine "blow-by" is the phenomenon of fuel vapors and combustion products in the cylinder passing by the piston rings and into the crankcase, causing certain oil additives to polymerize. US-A-4,021,357 purportedly has solved this problem by producing a polymer resistant to polymerization when "blow-by" occurs, while still being an effective viscosity index improver and detergent dispersant, as well as being resistant to oxidation.

It has now been found that, by polymerizing several alkyl methacrylates and N,N-dialkylaminoalkyl methacrylamide monomers and controlling the component weight ratio, a novel polymer with surprising properties when used as an additive for hydrocarbon lubricating oils can be produced. The polymer of this invention demonstrates superior properties as a viscosity index improver and a detergent dispersant and, in some instances, eliminates the need for a pour point depressant.

Accordingly, the present invention provides novel polymers with surprising properties and composed of several alkyl methacrylates and N,N-dialkylaminoalkyl methacrylamide monomers. Specifically, the polymers of this invention comprise, as polymerized monomers, monomers selected from: (a) alkyl methacrylates in which the alkyl group contains from 1 to 4 carbon atoms; (b) alkyl methacrylates in which the alkyl group contains from 10 to 15 carbon atoms; (c) alkyl methacrylates in which the alkyl group contains from 16 to 20 carbon atoms; and (d) N,N-dialkylaminoalkyl methacrylamides. The amounts of (a), (b), (c) and (d) in the polymer are:

i) from about 0 to 5 weight percent of (a); from about 74 to 97, preferably from about 83 to 96, weight percent of (b); up to about 15, preferably up to about 5, weight percent of (c); and from about 2 to 6, preferably about 4, weight percent of (d); or

ii) up to about 15, preferably up to 5, weight percent of (a); from about 79 to 97, preferably from about 83 to 96, weight percent of (b); and from about 2 to 6, preferably about 4, weight percent of (d).

The weight percentages of (a), (b), (c) and (d) are based on the total weight of the polymer, whereby the total of (a), (b), (c) and (d) equals 100 percent of the weight of the polymer.

The polymers of this invention can be prepared by mixing the monomers in the presence of a polymerization initiator, a chain transfer agent and a diluent. The reaction can be run under agitation in an inert atmosphere at a temperature of from about 60 to 140°C, preferably from 115 to 125°C. Typically, the batch will exotherm to the polymerization temperature of 115 to 120°C. The reaction is usually run for about 4 to 10 hours or until the desired degree of polymerization has been reached. As is recognized by those skilled in the art, the time and temperature of the reaction are dependent on the choice of initiator and can be varied accordingly.

Examples of (a), the alkyl methacrylate where the alkyl group contains from 1 to 4 carbon atoms, also called the "low-cut" alkyl methacrylate, are methyl methacrylate, propyl methacrylate, butyl methacrylate, isobutyl methacrylate (IBMA), and combinations thereof. The preferred low cut alkyl methacrylate is methyl methacrylate (MMA).

Examples of (b), the alkyl methacrylate where the alkyl group contains from 10 to 15 carbon atoms, also called the "mid-cut" alkyl methacrylate, are decyl methacrylate, isodecyl methacrylate (IDMA), undecyl methacrylate, dodecyl methacrylate, tridecyl methacrylate, tetradecyl methacrylate, pentadecyl methacrylate, and combinations thereof. Also useful for (b) are: DPMA, a mixture of 78 wt. % linear and 22 wt. % branched isomers of 23 wt.% dodecyl, 28 wt. % tridecyl, 28 wt. % tetradecyl and 21 wt. % pentadecyl methacrylates; and LMA, a mixture of 68 wt. % dodecyl and 32 wt. % tetradecyl methacrylates. The preferred mid-cut alkyl methacrylates are DPMA and LMA.

Examples of (c), the alkyl methacrylate where the alkyl group contains from 16 to 20 carbon atoms, also called the "high-cut" alkyl methacrylate, are hexadecyl methacrylate, heptadecyl methacrylate, octadecyl methacrylate, nonadecyl methacrylate, cosane methacrylate, eicosane methacrylate, and combinations thereof. Also useful for (c) are: CEMA, a combination of 55 wt. % hexadecyl, 33 wt. % octadecyl, 11 wt. % cosyl and 1 wt. % eicosyl methacrylate; and SMA, a mixture of 33 wt. % hexadecyl and 67 wt. % octadecyl methacrylate. The preferred high-cut alkyl methacrylate is CEMA.

Examples of (d), the N,N-dialkylaminoalkyl methacrylamide, are N,N-dimethylaminoethyl methacrylamide, N,N-dimethylaminopropyl methacrylamide, N,N-dimethylaminobutyl methacrylamide, N,N-diethylaminoethyl methacrylamide, N,N-diethylaminopropyl methacrylamide and N,N-diethylaminobutyl methacrylamide. The preferred N,N-dialkylaminoalkyl methacrylamide is N,N-dimethylaminopropyl methacrylamide (DMAPMA).

Initiators useful for the polymerization include any of the well known free radical producing compounds such as peroxy, hydroperoxy and azo initiators including acetyl peroxide, benzoyl peroxide, lauryl peroxide, t-butyl peroxyisobutyrate, capryl peroxide, azobisisobutyronitrile and t-butyl peroctoate. The more preferred initiator is t-butyl peroctoate. The initiator concentration is normally between 0.025 and 1% by weight based on the total weight of the monomers, and preferably from 0.05% to 0.25%. Chain transfer agents may also be added to the polymerization reaction to control the molecular weight of the polymer. The preferred chain transfer agents are alkyl mercaptans such as lauryl mercaptan, and the concentration of chain transfer agent used is preferably from 0 to 0.5 wt. %.

Diluents suitable for the polymerization include: aromatic hydrocarbons, such as benzene, toluene, xylene, and aromatic naphthas; chlorinated hydrocarbons such as ethylene dichloride; esters such as ethyl propionate or butyl acetate; and also petroleum oils or synthetic lubricants.

After the polymerization, the resultant polymer solution preferably has a polymer content of from about 50 to 95%. The polymer can be isolated and used directly in lubricating oil base stock, or the polymer and diluent solution can be used in a concentrate form. When used in the concentrate form, the polymer concentration can be adjusted to any desirable level with additional diluent. The preferred concentration of polymer in the concentrate is from 30 to 70 wt. %. When the concentrate is directly blended into a lubricating oil base stock, the preferred diluent is any mineral oil, such as 100 to 150 neutral oil, which is compatible with the final lubricating oil base stock.

The polymers of this invention may be evaluated by measuring the sonic shear stability according to ASTM-D-2603. The shear stability index (SSI) can be directly correlated to molecular weight and the typical range for the polymers of this invention is from about 0 to 90%. The more preferred polymers of this invention have an SSI of from about 6 to 10% (low molecular weight) and from about 30 to 40% (high molecular weight). The desired SSI can be achieved by either varying the reaction conditions such that the product polymer will have the desired SSI, or by mechanically shearing the product polymer to yield a polymer with a lower SSI.

When the polymer of the present invention is added to lubricating oil base stock, such as automatic transmission fluids and engine oils, whether it is added as pure polymer or as concentrate, the final concentration of the polymer of the present invention in the lubricating oil base stock is preferably from about 0.5 to 10 wt. %, and more preferably from about 1 to 6 wt. %. The concentration used is dependent on the desired properties of the lubricating oil, and generally, if a low molecular weight polymer is used, a higher concentration is necessary to achieve adequate thickening in the blend and, if a high molecular weight polymer is used, a lower concentration can be used in the oil.

Most lubricating oils contain pour point depressants. However, in some formulations where polymers of the present invention are used, the need for a pour point depressant is eliminated, or substantially reduced. Therefore, in some lubricating oil formulations, the polymers of this invention can not only act as viscosity index improvers and detergent dispersants, but also as pour point depressants.

The following Examples are presented to illustrate preferred embodiments of the present invention. In the Examples, all percentages are weight percentages unless specified otherwise.

Example 1

A monomer mix was prepared from 4.71 grams CEMA, 93.37 grams LMA, 4.00 grams N,N-dimethylaminopropyl methacrylamide, 0.085 grams dodecyl mercaptan, 0.075 grams t-butyl peroctoate, and 5.00 grams of napthenic oil base stock. Forty percent of this monomer mix (42.896 grams) was then charged to a nitrogen flushed kettle fitted with a thermometer and thermowatch to control temperature, a water-cooled reflux condenser with $N_2$ outlet, a stirrer, an $N_2$ inlet, and an addition funnel to control the addition of the balance of the monomer mix. The contents of the flask were heated to 105°C at which point the batch exothermed and heat was no longer applied. Once the temperature reached 115°C, the balance of the monomer mix (64.344 grams) was added uniformly over a 50 minute period. Heating or cooling was applied as needed to maintain the polymerization temperature at 115 to 120°C.

Thirty minutes after the end of the monomer feed, the first of three delayed initiator shots, each consisting of 0.10 grams of t-butyl peroctoate in 10.00 grams napthenic oil base stock, was added. Thirty minutes after the first delayed initiator shot the second delayed initiator shot, identical to the first delayed initiator shot, was made. Thirty minutes later, the third delayed initiator shot, again identical to the first delayed initiator shot, was made. Thirty minutes later, 62.46 grams of napthenic oil base stock was added to bring the batch to a theoretical solids of 50% polymer in oil. Throughout the polymerization the batch temperature was maintained at 115 to 120°C. Thirty minutes after the addition of the napthenic oil base stock, the batch was homogeneous and the polymerization was considered complete.

The conversion of monomer to polymer was about 91 to 98% and the polymer had a shear stability index (SSI) of 40%. The polymer solution was then further diluted with napthenic oil and 3.2 wt % Acryloid (a trademark of the Rohm and Haas Company) 155 pour point depressant to yield a concentrate containing approximately 36% total polymer (including the pour point depressant).

Example 2

(A lower molecular weight polymer than Example 1)

The same procedure as Example 1 was followed except that the monomer mix was 7.684 grams CEMA, 152.330 grams LMA, 6.526 grams N,N-dimethylaminopropyl methacrylamide, 0.489 grams dodecyl mercaptan, 0.122 grams t-butyl peroctoate, and 8.158 grams napthenic oil. Also, the three delayed initiator shots each consisted of 0.163 grams of t-butyl peroctoate in 8.158 grams napthenic oil. The batch had a theoretical solids of approximately 82% polymer and a conversion of 91 to 98% monomer to polymer. The polymer had an SSI (shear stability index) of 8%. The polymer solution was further diluted with napthenic oil and 1.8 wt % Acryloid 155 to a final concentrate of approximately 58% polymer.

Example 3

The same procedure as Example 1 was followed except that the monomer mix was 89.59 grams DPMA, 8.20 grams methyl methacrylate, 4.00 grams N,N-dimethylaminopropyl methacrylamide, 0.06 grams dodecyl mercaptan, 0.075 grams t-butyl peroctoate, and 5.00 grams napthenic oil. Also, the three delayed initiator shots each consisted of 0.10 grams of t-butyl peroctoate in 10.00 grams napthenic oil. The batch had a theoretical solids of approximately 82% polymer and a conversion of 91 to 98% monomer to polymer. The polymer had an SSI (shear stability index) of 40%. The polymer solution was further diluted with napthenic oil and 1.8 wt % Acryloid 155 to a final concentrate of approximately 58% polymer.

## APPLICATIONS TESTING

The polymers of this invention were further evaluated by adding them to several types of hydrocarbon lubricating oils. The concentrates prepared in the Examples were added to three grades of fully formulated, commercial type automatic transmission fluids (ATF) containing all the typical additives except the Viscosity Index Improver. In all cases, except where specified, the concentrate blended into the test fluids contained Acryloid 155 pour point depressant. The results are shown in Tables 1,2 and 3. Table 3 also shows that the need for a pour point depressant can be eliminated.

## TABLE 1

### Brookfield Viscosity Performance in Selected ATF

### Formulations

|  | Blending in ATF-1 | Blending in ATF-2 | Blending in ATF-3 | |
|---|---|---|---|---|
| Concentrate | 3.2% | 3.6% | 3.7% | |
| Viscosity | @-40°C, cP | @-40°C, cP | @-40°C, cP | @-18°C, cP |
| Visc Target | 40,000 max | 30,000 max | 55,000 max | 1,700 max |

Concentrate from Example 1: LMA/CEMA/DMAPMA 91.5/4.5/4

| | | | | |
|---|---|---|---|---|
| | 31,400 | 30,200 | ----- | ----- |

Concentrate from Example 3: MMA/DPMA/DMAPMA 8.2/87.8/4

| | | | | |
|---|---|---|---|---|
| | 36,050 | 36,175 | 32,000 | 1,075 |

Comparative: Texaco TLA-233 VI Improver
Assumed composition BMA/LMA/SMA/DMAPMA 34/36/26/4

| | | | | |
|---|---|---|---|---|
| | 40,500 | 72,300 | ----- | ----- |

## TABLE 2
### Low Temperature Performance:
### Effect of Variation in Polymer Composition

| | | Polymer Composition, wt % | | | | | | Brookfield Visc., cP -40°C * | |
|---|---|---|---|---|---|---|---|---|---|
| CEMA | SMA | LMA | DPMA | IDMA | IBMA | MMA | DMAPMA | ATF-1 | ATF-2 |
| | | 87.8 | | | | 8.2 | 4.0 | 32125 | 47800 |
| 5.8 | | | 90.2 | | | | 4.0 | 33350 | 38100 |
| 5.5 | | | 86.3 | | | 4.2 | 4.0 | 32275 | 30200 |
| 4.5 | 89.5 | | | | 2.0 | | 4.0 | 34625 | 32025 |

*ATF-1 blends used 3.5% concentrate containing 3.2% Acryloid 155
ATF-2 blends used 3.6% concentrate containing 3.2% Acryloid 155

## TABLE 3
### Low Temperature Performance:
### Comparison of Polymers With and Without Added Pour
### Point Depressant (PPD)

| | Polymer Compositions, wt % | | | | % PPD in PRODUCT** | Brookfield Visc., cP -40°C * | |
|---|---|---|---|---|---|---|---|
| CEMA | SMA | DPMA | MMA | DMAPMA | | ATF-1 | ATF-2 |
| | | 87.8 | 8.2 | 4.0 | 0.0 | 34500 | 42200 |
| | | 87.8 | 8.2 | 4.0 | 3.2 | 31500 | 33200 |

*ATF-1 blends used 3.5% concentrate.
ATF-2 blends used 3.6% concentrate.
**Pour point depressant was Acryloid 155.

## Claims

1. An oil-soluble polymer, which comprises, as polymerized monomers, monomers selected from: (a) alkyl methacrylates in which the alkyl group contains from 1 to 4 carbon atoms; (b) alkyl methacrylates in which the alkyl group contains from 10 to 15 carbon atoms; (c) alkyl methacrylates in which the alkyl group contains from 16 to 20 carbon atoms; and (d) N,N-dialkylaminoalkyl methacrylamides; and wherein said polymer contains:
   i) 0 to 5% of (a), 74 to 97% of (b), up to 15% of (c) and 2 to 6% of (d); or
   ii) up to 15% of (a), 79 to 97% of (b), and 2 to 6% of (d); and wherein the total of (a), (b), (c) and (d) equals 100% by weight of the polymer.

2. An oil-soluble polymer as claimed in claim 1, wherein said polymer contains 0 to 5% (a), 83 to 96% (b), up to 5% (c) and about 4% (d), and the total of (a), (b), (c) and (d) equals 100% by weight of the polymer.

3. A polymer as claimed in claim 1 or claim 2, wherein (a) is present and is methyl methacrylate.

4. An oil-soluble polymer as claimed in claim 1, wherein said polymer contains 79 to 97% (b), up to 15% (c), and 2 to 6% of (d), and the total of (b), (c) and (d) equals 100% by weight of the polymer.

6

5. An oil-soluble polymer as claimed in any preceding claim, wherein said polymer has a shear stability index of 0 to 90%.

6. An oil-soluble polymer as claimed in claim 5, wherein said polymer has a shear stability index of 30 to 40%, or 6 to 10%.

7. A polymer as claimed in any preceding claim, wherein (d) is N,N-dimethylaminopropyl methacrylamide.

8. A concentrate for use in lubricating oils, which comprises
   i) from about 30 to 70% by weight of the concentrate of a polymer as claimed in any of claims 1 to 7; and
   ii) a diluent.

9. A lubricating oil composition, which comprises a lubricating oil and between about 0.5 and 10% by weight of the composition of a polymer as claimed in any of claims 1 to 7.

10. A composition as claimed in claim 9, wherein the lubricating oil is an automatic transmission fluid.